# DEMANDE DE BREVET EUROPEEN

(11) **EP 0 683 070 A1**
(43) Date de publication de la demande: **22.11.1995**
(21) Numéro de dépôt: 94440036.5
(22) Date de dépôt: 18.05.1994
(51) Int. Cl.: B60R 1/06

(54) **Mécanisme de réglage de position d'un miroir de rétroviseur extérieur**

(71) Demandeur: HARMAN AUTOMOTIVE, S.A., F-57260 Dieuze (FR)
(72) Inventeur: Jeanpierre, Emmanuel, F-57000 Metz (FR)
(74) Mandataire: Nuss, Pierre

(57) **Abrégé**

La présente invention a pour objet un mécanisme de réglage de position d'un miroir de rétroviseur extérieur, essentiellement constitué par une embase (1) de fixation dans le boîtier de rétroviseur et par un élément de support (2) monté mobile en pivotement sur l'embase (1).

Mécanisme caractérisé en ce que l'élément de support mobile (2) est guidé sur l'embase (1) sans possibilité de rotation et est maintenu sur cette dernière par un moyen de liaison indépendant (3), ledit élément mobile (2) étant bloqué en position de service, après réglage, par frottement contre le moyen de liaison (3) et étant débloqué pour le réglage par mise hors de contact d'avec ce moyen de liaison (3).

## Description

La présente invention concerne le domaine des équipements automobiles, en particulier des rétroviseurs extérieurs, et a pour objet un mécanisme de réglage de position d'un miroir de rétroviseur extérieur.

Actuellement, les rétroviseurs extérieurs réglables à partir de l'intérieur des véhicules automobiles sont généralement essentiellement constitués par deux pièces emboîtées l'une dans l'autre, à savoir une pièce mobile formant le support du miroir et une pièce fixe formant le palier de la pièce mobile.

La pièce mobile est commandée à partir de l'intérieur du véhicule au moyen d'une tringlerie à câbles actionnée par l'intermédiaire d'un levier ou d'un bouton correspondant et est guidée sur la pièce fixe et reliée à cette dernière par une articulation du type à cardan ou à rotule avec un jeu de fonctionnement à léger serrage.

Ces rétroviseurs extérieurs réglables connus donnent généralement satisfaction au début de leur utilisation, mais, après un certain nombre de manoeuvres, leurs pièces fixe et mobile sont exposées à une usure prématurée de leurs parties en contact, entraînant un risque de blocage du mécanisme par grippage ou suite à un affaissement des surfaces formant paliers. Il en résulte une gêne importante pour l'utilisateur, qui n'est plus en mesure de régler correctement son rétroviseur et qui risque de le casser totalement en le forçant.

Cette usure prématurée est due au fait que la pièce mobile, qui, pour son guidage, s appuie sur un ou plusieurs paliers prévus sur la pièce fixe, est tirée en direction de ladite pièce fixe par la tringlerie de manoeuvre, de sorte que l'effort de pression des pièces en contact est augmenté et que leur usure est accélérée.

Un tel constat entraîne la nécessité de pourvoir au remplacement de l'ensemble du rétroviseur.

La présente invention a pour but de pallier ces inconvénients.

Elle a, en effet, pour objet un mécanisme de réglage de position d'un miroir de rétroviseur extérieur, essentiellement constitué par une embase de fixation dans le boîtier de rétroviseur et par un élément de support monté mobile en pivotement sur l'embase, caractérisé en ce que l'élément de support mobile est guidé sur l'embase sans possibilité de rotation et est maintenu sur cette dernière par un moyen de liaison indépendant, ledit élément mobile étant bloqué en position de service, après réglage, par frottement contre le moyen de liaison et étant débloqué pour le réglage par mise hors de contact d'avec ce moyen de liaison.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en coupe d'un mécanisme conforme à l'invention ;
la figure 2 est une vue en plan du mécanisme suivant la figure 1 ;
les figures 3 et 4 sont des vues analogues à celles des figures 1 et 2 d'une variante de réalisation de l'invention, et
les figures 5 et 6 représentent, dans des vues analogues aux figures 1 et 2, une autre variante de réalisation de l'invention, la figure 6 présentant deux demi-vues en plan de la figure 5, l'une sans couvercle et l'autre avec couvercle.

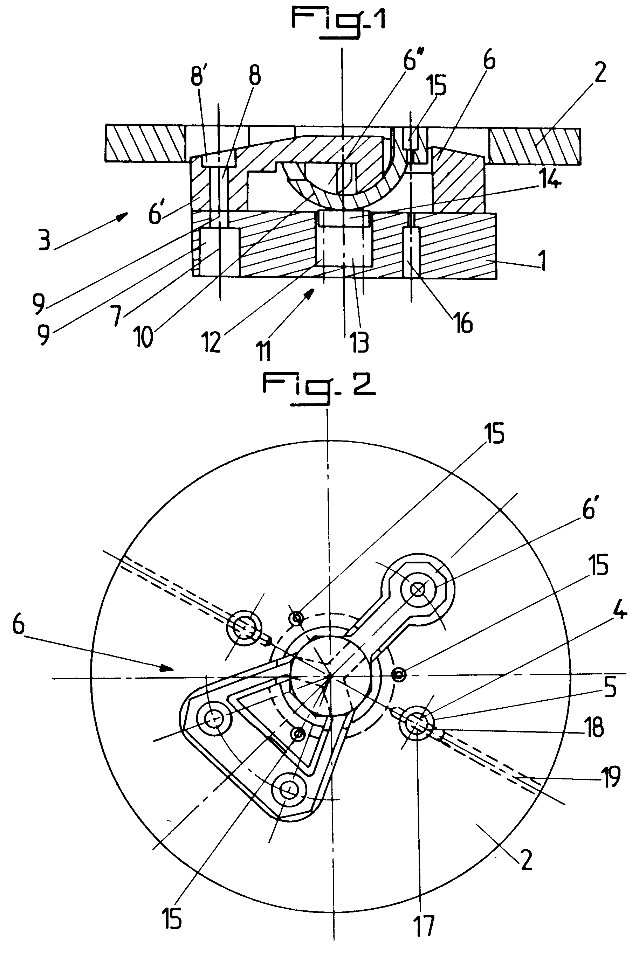

Conformément à l'invention et comme le montrent plus particulièrement, à titre d'exemple, les figures 1 à 6 des dessins annexés, le mécanisme de réglage de position d'un miroir de rétroviseur extérieur, qui est essentiellement constitué par une embase 1 de fixation dans le boîtier de rétroviseur et par un élément de support 2 monté mobile en pivotement sur l'embase 1, est caractérisé en ce que l'élément de support mobile 2 est guidé sur l'embase 1 sans possibilité de rotation et est maintenu sur cette dernière par un moyen de liaison indépendant 3, ledit élément mobile 2 étant bloqué en position de service, après réglage, par frottement contre le moyen de liaison 3 et étant débloqué pour le réglage par mise hors de contact d'avec ce moyen de liaison 3.

Les figures 1 et 2 représentent un premier mode de réalisation de l'invention, dans lequel l'embase 1 de fixation dans le rétroviseur se présente sous forme d'une platine pourvue de deux broches 4 s'étendant verticalement, diamétralement opposées et destinées à coopérer avec des perçages correspondants 5 de l'élément de support mobile 2, pour le blocage en rotation de ce dernier.

Le moyen de liaison indépendant 3 reliant avec possibilité de pivotement l'élément de support mobile 2 à l'embase 1 se présente, de préférence, sous forme d'un cavalier 6, qui, d'une part, s'appuie par des pattes 6' sur l'embase 1 d'autre part, s'appuie dans un évidement correspondant 10 de l'élément de support mobile 2 au moyen d'un dispositif 6'' de forme correspondante et, enfin, est fixé sur l'embase 1 par l'intermédiaire de moyens d'assemblage démontables ou non 7 traversant des perçages correspondants 8 et 9 des pattes 6' de la pièce de support mobile 2 et de l'embase 1 et s'appuyant par leurs extrémités dans des chambrages 8' et 9' correspondants. Ces moyens d'assemblage 7 sont uniquement représentés par leur trait d'axe et peuvent être constitués, de manière démontable, sous forme d'ensembles vis-écrou, ou de manière indémontable, sous forme d'éléments sertis.

L'élément de support mobile 2 est pourvu, de manière connue, et comme le montrent les figures 1 à 6, de trois logements 15 de réception, chacun, d'une ferrule d'un câble d'une tringlerie de commande de réglage de la position du miroir du rétroviseur. Ces câbles sont guidés dans des perçages correspondants 16 prévus dans l'embase 1.

L'élément de support mobile 2 est bloqué contre le moyen de liaison 3 par application d'une pression sous l'évidement 10 de l'élément de support mobile 2 par l'intermédiaire d'un dispositif de pression à ressort 11.

Selon une caractéristique de l'invention, le dispositif de pression à ressort 11 est constitué par un ressort 12 s'appuyant par une extrémité dans le fond d'un logement 13 de l'embase 1 et par son autre extrémité sur la face inférieure d'une pièce d'usure 14, dont l'autre face présente un faible coefficient de frottement et est en contact avec la partie inférieure de l'évidement 10 de l'élément de support mobile 2.

Grâce à un tel mode de réalisation, la partie supérieure de l'évidement 10 et, de ce fait, l'élément de support mobile 2, est pressée contre le dispositif 6'' du cavalier 6 en position de service après réglage et, ainsi, l'élément de support mobile 2 est bloqué en position par frottement. En effet, lors d'une manoeuvre de réglage du miroir, l'actionnement de la tringlerie de commande entraîne une traction sur l'élément de support mobile 2 ayant pour conséquence de déplacer la pièce d'usure 14, sous l'effet de la traction engendrée par les câbles de la tringlerie, contre l'action du ressort 12.

Ce déplacement de l'élément de support 2 entraîne un décollement de la partie supérieure de l'évidement 10 d'avec le dispositif 6'' du cavalier 6 et ainsi un déblocage de cet élément de support 2 permettant sa manoeuvre aisée par la tringlerie de commande, par glissement à frottement réduit sur la pièce d'usure 14, de sa partie inférieure.

Conformément à une caractéristique de l'invention, l'évidement 10 se présente sous forme d'une calotte sphérique.

Selon une autre caractéristique de l'invention, la pièce d'usure 14 présente une surface concave en portion de sphère polie. Ainsi, la coopération de la surface de la pièce d'usure 14 avec celle correspondante de l'évidement 10 entraîne une possibilité de glissement aisé de la surface de l'évidement 10 sur la pièce d'usure 14.

Il est également possible, selon une variante de réalisation de l'invention, non représentée aux dessins annexés, de munir la surface supérieure de la pièce d'usure 14 de plots d'appui polis épousant la forme de la surface correspondante de l'évidement 10.

Selon une autre variante de réalisation de l'invention, la pièce d'usure 14 peut également être pourvue de plusieurs surfaces d'appui polies s'étendant radialement en saillie sur sa partie tournée vers la surface correspondante de l'évidement 10.

La prévision de tels plots ou surfaces d'appui permet de réduire les surfaces en contact entre la pièce d'usure 14 et la surface correspondante de l'évidement 10, de sorte que le glissement mutuel lors d'une manoeuvre de réglage est encore amélioré par une réduction correspondante du frottement. Il en résulte également une moindre usure de la surface de l'évidement 10.

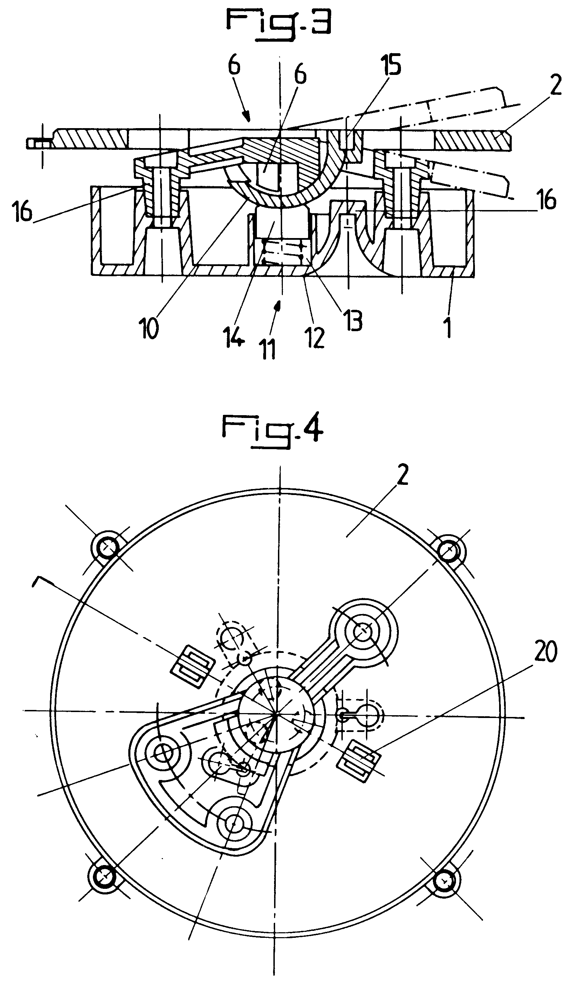

Pour garantir le maintien en rotation de l'élément de support mobile 2, les broches 4 de l'embase 1 sont avantageusement pourvues à leur extrémité libre d'une entaille verticale 17 destinée à coopérer, soit avec des axes 18 traversant les perçages correspondants 5 de l'élément de support mobile 2 et insérés à travers des perçages axiaux 19 dudit élément de support mobile 2 (figure 2), soit avec des éléments 20 s' étendant transversalement aux perçages 5 et solidaires de l'élément de support mobile 2 (figure 4). Dans ce dernier cas, les éléments 20 peuvent être prévus d'une seule pièce avec l'élément de support mobile 2, par exemple par moulage.

Les figures 3 et 4 des dessins annexés représentent une variante de réalisation du mécanisme suivant les figures 1 et 2, dans laquelle l'embase 1, l'élément de support mobile 2 et le cavalier 6 formant le moyen de liaison indépendant 3, sont réalisés par moulage et les pattes 6' sont centrées à leur extrémité dans des logements correspondants de l'embase 1.

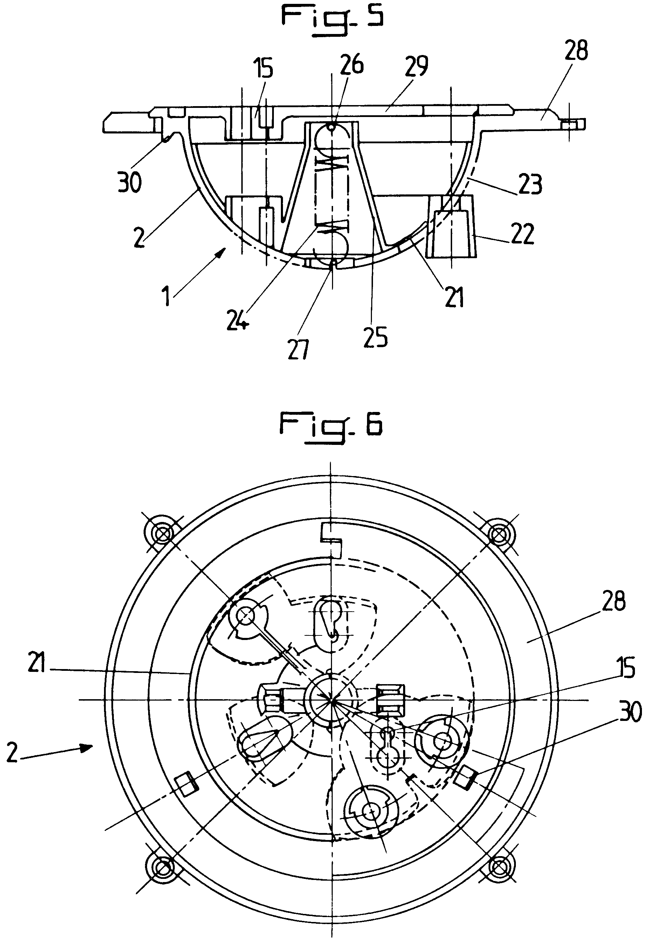

Les figures 5 et 6 représentent une autre variante de réalisation de l'invention, dans laquelle l'embase 1 se présente sous forme d'une pièce 21 à surface hémisphérique pourvue de plots 22 de fixation dans le boîtier du rétroviseur et coopérant, par l'intermédiaire de cette surface hémisphérique, avec l'élément de support mobile 2', qui est sous forme d'une calotte hémisphérique enveloppant l'embase 1 ou pièce 21 à surface hémisphérique, en laissant subsister des ouvertures 23 de passage des plots 22 de l'embase 1 ou pièce 21, la liaison de blocage par frottement entre l'élément mobile 2 et l'embase 1 ou pièce 21 étant réalisée au moyen d'un ressort 24, formant le moyen de liaison indépendant 3, tendu dans un puits 25 de l'embase 1 ou pièce 21, entre un axe d'accrochage 26 de ce dernier et un autre axe d'accrochage 27 solidaire de la calotte hémisphérique formant l'élément de support mobile 2'.

Selon une caractéristique de l'invention, l'élément de support mobile 2' est pourvu, en outre, d'un rebord périphérique 28 et d'un couvercle 29 muni des logements 15 pour les ferrules des extrémités des câbles formant la tringlerie de commande de réglage du rétroviseur, ledit couvercle étant fixé sur l'élément de support mobile 2' par l'intermédiaire de clips 30.

Suivant ce mode de réalisation, un actionnement de la tringlerie de commande de réglage du miroir du rétroviseur entraîne un déplacement de l'élément de support mobile 2' tendant à décoller sa face sphérique interne de la surface correspondante de l'embase 1 et autorisant un pivotement aisé dudit élément de support mobile 2'. Après réglage, le relâchement de la tringlerie permet, sous l'effet de la traction du ressort 24, un appui de l'élément de support 2' contre l'embase 1 et, ainsi, un blocage en position.

Ce dernier mode de réalisation permet une liaison directe entre l'élément 2' et l'embase 1 par l'intermédiaire du ressort 24, sans utilisation de pièces annexes, de sorte que sa construction en est simplifiée et que ses coûts de production sont diminués en conséquence.

Grâce à l'invention, il est possible de réaliser des mécanismes de réglage de position du miroir de rétroviseurs extérieurs, d'une grande fiabilité, de construction simple et peu onéreuse et ne présentant aucun risque de blocage suite à usure par vieillissement.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Mécanisme de réglage de position d'un miroir de rétroviseur extérieur, essentiellement constitué par une embase (1) de fixation dans le boîtier de rétroviseur et par un élément de support (2) monté mobile en pivotement sur l'embase (1), caractérisé en ce que l'élément de support mobile (2) est guidé sur l'embase (1) sans possibilité de rotation et est maintenu sur cette dernière par un moyen de liaison indépendant (3), ledit élément mobile (2) étant bloqué en position de service, après réglage, par frottement contre le moyen de liaison (3) et étant débloqué pour le réglage par mise hors de contact d'avec ce moyen de liaison (3).

2. Mécanisme, suivant la revendication 1, caractérisé en ce que l'embase (1) de fixation dans le rétroviseur se présente sous forme d'une platine pourvue de deux broches (4) s'étendant verticalement, diamétralement opposées et destinées à coopérer avec des perçages correspondants (5) de l'élément de support mobile (2), pour le blocage en rotation de ce dernier.

3. Mécanisme, suivant l'une quelconque des revendications 1 et 2, caractérisé en ce que le moyen de liaison indépendant (3) reliant avec possibilité de pivotement l'élément de support mobile (2) à l'embase (1) se présente, de préférence, sous forme d'un cavalier (6), qui, d'une part, s'appuie par des pattes (6') sur l'embase (1), d'autre part, s'appuie dans un évidement correspondant (10) de l'élément de support mobile (2) au moyen d'un dispositif (6'') de forme correspondante et, enfin, est fixé sur l'embase (1) par l'intermédiaire de moyens d'assemblage démontables ou non (7) traversant des perçages correspondants (8 et 9) des pattes (6') de la pièce de support mobile (2) et de l'embase (1) et s'appuyant par leurs extrémités dans des chambrages (8' et 9') correspondants.

4. Mécanisme, suivant l'une quelconque des revendications 1 à 3, caractérisé en ce que l'élément de support mobile (2) est bloqué contre le moyen de liaison (3) par application d'une pression sous l'évidement (10) de l'élément de support mobile (2) par l'intermédiaire d'un dispositif de pression a ressort (11).

5. Mécanisme, suivant la revendication 4, caractérisé en ce que le dispositif de pression à ressort (11) est constitué par un ressort (12) s'appuyant par une extrémité dans le fond d'un logement (13) de l'embase (1) et par son autre extrémité sur la face inférieure d'une pièce d'usure (14), dont l'autre face présente un faible coefficient de frottement et est en contact avec la partie inférieure de l'évidement (10) de l'élément de support mobile (2).

6. Mécanisme, suivant l'une quelconque des revendications 3 à 5, caractérisé en ce que l'évidement (10) se présente sous forme d'une calotte sphérique.

7. Mécanisme, suivant la revendication 5, caractérisé en ce que la pièce d'usure (14) présente une surface concave en portion de sphère polie.

8. Mécanisme, suivant la revendication 5, caractérisé en ce que la surface supérieure de la pièce d'usure (14) est munie de plots d'appui polis épousant la forme de la surface correspondante de l'évidement (10).

9. Mécanisme, suivant la revendication 5, caractérisé en ce que la pièce d'usure (14) est pourvue de plusieurs surfaces d'appui polies s'étendant radialement en saillie sur sa partie tournée vers la surface correspondante de l'évidement (10).

10. Mécanisme, suivant la revendication 2, caractérisé en ce que les broches (4) de l'embase (1) sont avantageusement pourvues à leur extrémité libre d'une entaille verticale (17) destinée à coopérer, soit avec des axes (18) traversant les perçages correspondants (5) de l'élément de support mobile (2) et insérés à travers des perçages axiaux (19) dudit élément de support mobile (2), soit avec des éléments (20) s'étendant transversalement aux perçages (5) et solidaires de l'élément de support mobile (2).

11. Mécanisme, suivant la revendication 1, caractérisé en ce que l'embase (1), l'élément de support mobile (2) et le cavalier (6) formant le moyen de liaison indépendant (3), sont réalisés par moulage et les pattes (6') sont centrées à leur extrémité dans des logements correspondants de l'embase (1).

12. Mécanisme, suivant la revendication 1, caractérisé en ce que l'embase (1) se présente sous forme d'une pièce (21) à surface hémisphérique pourvue de plots (22) de fixation dans le boîtier du rétroviseur et coopérant, par l'intermédiaire de cette surface hémisphérique, avec l'élément de support mobile (2'), qui est sous forme d'une calotte hémisphérique enveloppant l'embase (1) ou pièce (21) à surface hémisphérique, en laissant subsister des ouvertures (23) de passage des plots (22) de l'embase (1) ou pièce (21) à surface hémisphérique, la liaison de blocage par frottement entre l'élément mobile (2) et l'embase (1) ou pièce (21) à surface hémisphérique étant réalisée au moyen d'un ressort (24) formant le moyen de liaison indépendant (3), tendu dans un puits (25) de l'embase (1) ou pièce (21) à surface hémisphérique entre un axe d'accrochage (26) de ce dernier et un autre axe d'accrochage (27) solidaire de la calotte hémisphérique formant l'élément de support mobile (2').

13. Mécanisme, suivant la revendication 12, caractérisé en ce que l'élément de support mobile (2') est pourvu, en outre, d'un rebord périphérique (28) et d'un couvercle (29) muni des logements (15) pour les ferrules des extrémités des câbles formant la tringlerie de commande de réglage du rétroviseur, ledit couvercle étant fixé sur l'élément de support mobile (2') par l'intermédiaire de clips (30).
